# EUROPEAN PATENT SPECIFICATION

(11) **EP 2 623 816 B1**
(45) Date of publication and mention of the grant of the patent: **07.11.2018**
(21) Application number: 11828379.5
(22) Date of filing: 26.09.2011
(51) Int. Cl.: F16F 9/05, F16F 1/36, F16F 15/023, F16F 15/04, B61F 5/10, F16F 13/00, F16F 9/04

(54) **AIR SPRING DEVICE**
LUFTFEDERVORRICHTUNG
DISPOSITIF DE RESSORT PNEUMATIQUE

(30) Priority: 28.09.2010 JP 2010217459
(43) Date of publication of application: 07.08.2013
(73) Proprietor: Bridgestone Corporation, Tokyo 104-8340 (JP)
(72) Inventor: KAWADA, Masayoshi, Yokohama-shi Kanagawa 244-8510 (JP); MOTOMURA, Hiroaki, Yokohama-shi Kanagawa 244-8510 (JP)
(74) Representative: Lamb, Martin John Carstairs
(86) International application number: PCT/JP2011/005375
(87) International publication number: WO 2012/042813

(56) References cited:
- WO-A1-2009/021848
- WO-A1-2009/021848
- JP-A- 60 226 308
- JP-U- 57 155 340

## Description

### TECHNICAL FIELD

The present invention relates to an air spring device, particularly for use in a railway vehicle comprising: an air spring having a gas-filled interior defined by an upper face plate, a lower face plate, and a cylindrical flexible diaphragm body hermetically connecting the respective face plates; a support plate and an elastic body connecting the support plate and the one of the upper and lower face plates. In particular, the invention proposes a technique for such an air spring device to prevent a decrease in durability due to a large input force in the horizontal direction, while exhibiting soft spring characteristics in the vertical direction to ensure high ride comfort even if the air spring is deflated by a puncture or the like.

### RELATED ART

Since the distance between rail yards is relatively far, railway vehicles used in, for example, Europe, and especially those for high-speed rail must travel for a certain distance at a speed close to the normal operation even under a condition that an air spring of an air spring device used between a vehicle body and a bogie is deflated. Therefore, there is a need for an air spring device capable of exhibiting sufficiently soft spring characteristics even under the deflated condition in order to ensure high ride comfort of the vehicle.

A conventional air spring device of this type is known from, for example, Patent Document 1, which discloses "an air spring device having an outer cylinder, an inner cylinder, a diaphragm arranged between the outer and inner cylinders, a support member having a cone or pyramid shaped outer peripheral face, an annular elastic body arranged between the inner cylinder and the outer peripheral face of the support member, wherein a buffer body having an elastic member is arranged between the inner cylinder and the support member; and the elastic member is configured so that an elastic deformation thereof caused by a relative approaching movement between the support member and the inner cylinder is initiated after a given amount of elastic deformation of the elastic body occurs." According to the "air spring", "the annular elastic body arranged between the inner cylinder and the outer peripheral surface of the support member could be improved to have non-linear characteristics so that it had soft spring characteristics during a normal operation while generally having hard spring characteristics to exert rigidity against a large load,"

As illustrated in Fig. 5 of this application, the "air spring" of Patent Document 1 is configured such that the "annular elastic body 100" is formed by alternately stacking frustum shaped "annular rubber members 100A-100C" and "annular metal members 100a and 100b" in respectively different sizes to form a "layered rubber" to allow a vertical load to be softly supported in an elastic manner by a share deformation of the "annular elastic body 100." However, the "annular metal members 100a and 100b" which do not elastically deform are interposed between the "annular rubber members 100A-100C", so that, especially when the "diaphragm 101" is punctured, horizontal spring characteristics of the "annular the elastic body 100" cannot be sufficient soft. This causes a problem that the followability of the air spring is deteriorated and thus the prevention of derailing a railway vehicle has to rely on a sliding movement through a sliding seat and a stopper which allows a certain displacement.

In order to provide soft spring characteristics in both of vertical and horizontal directions, there has been proposed an air spring device in which a support plate and one of upper and lower face plates are connected by an elastic body made only of elastic material without including any rigid material (e.g. metallic material). In this air spring device, a center region of a face of the elastic body adjacent to the support plate is provided with a recessed portion recessed toward the one of the upper and lower face plates to further reduce the vertical spring constant.

Patent Document 1: Japanese Patent Application Laid-Open Publication No.2006-329280

Document WO 2009/021848 A1 discloses an air spring device comprising an air spring having a gas-filled interior defined by an upper face plate, a lower face plate, and a cylindrical flexible diaphragm body hermetically connecting the respective face plates and a support plate arranged at a given distance from one of the upper and lower face plates of the air spring and an elastic body connecting the support plate and the one of the upper and lower face plates, wherein the elastic body is provided with a recessed portion in a centre region of a face adjacent to the support plate, the recessed portion being recessed toward the one of the upper and lower face plates and the elastic body is restrained by an annular body which is provided on the support plate and which projects from the support plate and the one of the upper and lower face plates is provided with a protruding portion protruding towards an interior of the annular body.

### SUMMARY OF THE INVENTION

The "air spring" described in Patent Document 1, and the above-mentioned air spring device in which one of the upper and lower face plates and the support plate of the air spring are connected by the elastic body made only of elastic material have low vertical rigidity. Therefore, when a horizontal input force is applied to the air spring device with the elastic body being compressively deformed under a heavy load condition such as a condition where the vehicle is fully loaded, in other words, under an action of a large vertical load, the lower face plate or the upper face plate tends to be in an inclined posture with respect to the horizontal direction. This causes problems that a contact between the upper face plate and the lower face plate or between one of these plates and the supporting member occurs, and that the durability of the elastic member and consequently of the air spring device is decreased.

This invention is to address the problems faced by conventional techniques. The purpose of this invention is to provide an air spring device having an elastic member which is interposed between an air spring and a support plate to connect the air spring and the support plate and which is configured by a elastic body made only of elastic material, the air spring device being capable of realizing soft spring characteristics in both of vertical and horizontal direction flexibility while providing desired horizontal rigidity when a large vertical input is applied, thereby improving the durability.

An air spring device according to the present invention includes: an air spring having a gas-filled interior defined by an upper face plate, a lower face plate, and a cylindrical flexible diaphragm body hermetically connecting the respective face plates; a support plate arranged at a given distance from one of the upper and lower face plates of the air spring; and an elastic body connecting the support plate and the one of the upper and lower face plates, wherein the elastic body is provided with a recessed portion in a center region of a face adjacent to the support plate, the recessed portion being recessed toward the one of the upper and lower face plates; the elastic body is surrounded and restrained at a support plate side by an annular body which is provided on the support plate and which projects from the support plate; and the one of the upper and lower face plates is provided with a protruding portion protruding to an interior of the annular body. It is noted that the annular body may be formed integrally with the support or formed separately from and attached to the support plate.

The support plate is preferably provided with a raised portion housed in the recessed portion of the elastic body.

The protruding portion of the one of the upper and lower face plates preferably has an interior formed as a gas chamber in communication with the air spring.

According to the air spring device of the present invention, the elastic body formed only of elastic material without including any rigid material connects the air spring and the support plate, and the elastic body is provided with the recessed portion in a center region of a face adjacent to the support plate, the recessed portion being recessed toward the one of the upper and lower face plates, so that the entire elastic body formed only of elastic material is largely deformed in an elastic manner, as compared to the ones having interposed rigid layers between the elastic material, with respect to vertical and horizontal input forces on the air spring device. In particular, with respect to the vertical input force, the recessed portion serves as a clearance for a part of the elastic body, and the vertical and horizontal spring constant of the elastic body itself can decrease greatly as compared to the spring constant of a conventional elastic body having alternately layered rigid and elastic members. In addition, the air spring device can provide soft spring characteristics in the vertical direction to ensure superior ride comfort of the vehicle even if the air spring is deflated.

The elastic body is surrounded and restrained at the support plate side by the annular body provided on the support plate, and the one of the upper and lower face plates is provided with the protruding portion protruding to the interior of the annular body, so that, under an action of a large vertical input force, the protruding portion provided on the one of the upper and lower face plates protrudes into the interior of the annular body. In this posture, with respect to the vertical input force on the air spring device, the elastic body portion interposed between the protruding portion and the annular body undergoes a primarily compressive deformation, so that the air spring device elastically bears the horizontal input force while providing high rigidity. In particular, under a large support load condition that the vehicle is fully loaded, the cylindrical flexible diaphragm body with increased internal pressure and horizontal rigidity in accordance with the increase of the support load serves to further protrude the protruding potion into the interior of the annular body to harden the horizontal spring characteristics of the air spring according to the increase of the support load. As a result, as mentioned above, the deformation of the one of the upper and lower face plates involving the inclined posture with respect to the horizontal direction can be prevented to effectively avoid a deterioration of the durability of the air spring due to the occurrence of such deformation.

When the support plate is provided with the raised portion housed in the recessed portion of the elastic body, and when the elastic body deforms significantly in the horizontal direction due to a large horizontal input force, the raised portion contacts the inner surface of the recessed portion of the elastic body and functions to regulate the amount of horizontal displacements of the support plate and the air spring. By appropriately selecting the size and shape of the raised portion, the spring characteristics in the horizontal direction can be hardened more as required while the soft spring characteristics in the vertical direction due relation to the recessed portion of the elastic body can be retained.

When the protruding portion of the one of the upper and lower face plates has an interior formed as a gas chamber in communication with the air spring, the internal capacity of the air spring is increased to mitigate the increase of the internal pressure of the air spring due to the vertical input force. Therefore, under the condition that the air spring is not punctured and functions effectively, the air spring device can have soft spring characteristics in the vertical direction to further improve the ride comfort of the vehicle.

### BRIEF DESCRIPTION OF DRAWINGS

Fig. 1 is a partially broken perspective view of one embodiment of the air spring device according to the present invention.
Fig. 2 is a vertical sectional view of the air spring device shown in Fig. 1 taken along the line II-II in Fig. 1.
Fig. 3 is an enlarged cross-sectional view of main portions in Fig. 2.
Fig. 4 is a view similar to Fig. 2 showing another embodiment.

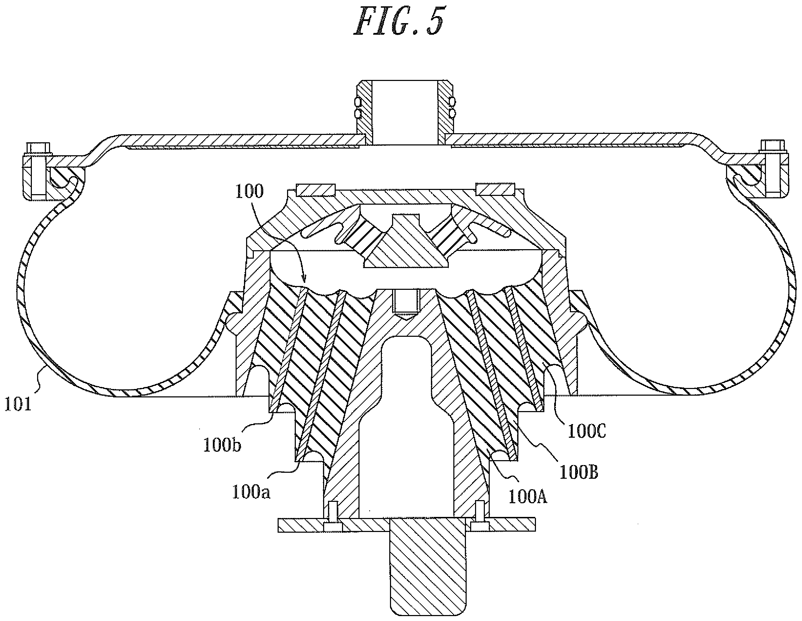

Fig. 5 is a vertical cross-sectional view of the conventional air spring device.

### DESCRIPTION OF EMBODIMENTS

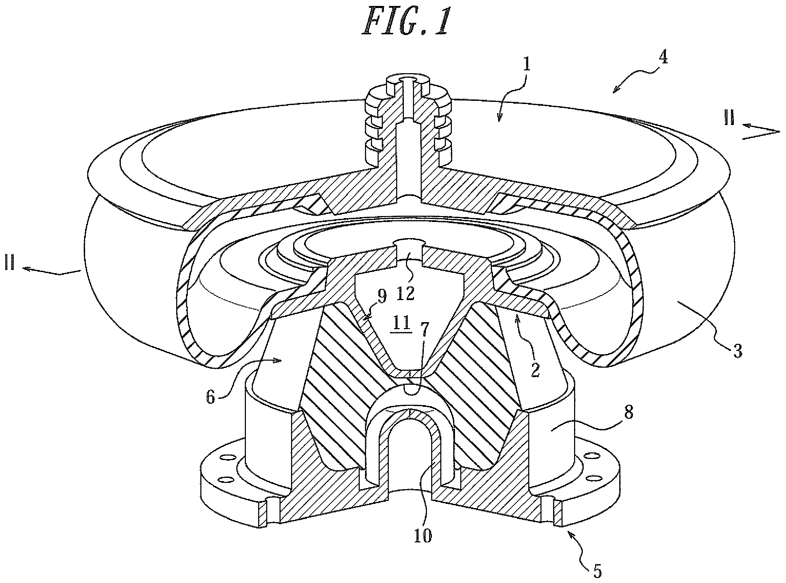

An embodiment of the present invention is described below with reference to the drawings. An air spring device shown in Fig. 1 includes: an air spring 4 having a gas-filled interior defined by an upper face plate 1, a lower face plate 2, both of which may have an annular-disk shape, and a cylindrical flexible diaphragm body 3 having, for example, an embedded reinforce layer (not shown) therein and hermetically connecting the respective face plates; a support plate 5 arranged at a given distance from, in this embodiment, the lower face plate 2 of the air spring 4; and an elastic body 6 connecting the support plate 5 and the lower face plate 2. It should be noted that, although it is not illustrated in the figure, the upper face plate and the support plate may be connected by the elastic body to have a posture that the air spring device shown in Fig. 1 is turned upside down.

The upper and lower face plates 1,2 and the support plate 5 are respectively formed of rigid material such as metallic material, plastic material or the like. The elastic body 6 is formed only of elastic material such as rubber, elastomer or the like without including any rigid material. Since the elastic body 6 is formed only of elastic material, unlike the conventional air spring device having a multilayer structure alternately layered with rigid members and elastic members, the elastic deformation of the elastic members is not restrained between the elastic members. In addition, because there is no rigid member, the elastic body 6 can deform larger to effectively reduce vertical spring constant of the elastic body 6 and consequently the air spring device.

In order to further reduce the vertical spring constant, the elastic body 6 is provided with a recessed portion 7 in a center region of a face adjacent to the support plate 5 and the recessed portion 7 is recessed toward the lower face plate 2. Given the recessed portion 7, when a vertical load is applied, a part of the elastic body 6 can be deformed into the interior of the recessed portion 7. Therefore, the air spring device according to the present invention in combination with the above-mentioned feature that the elastic body 6 is formed only of elastic material can provide sufficiently soft spring characteristics in the vertical direction even if the air spring 4 is deflated. It should be noted that as long as the recessed portion 7 serves as a clearance for a part of the deformation of the elastic body 6, the bottom of the recessed portion 7 is not limited to have a curved shape as illustrated in Fig. 1, but may also have various shapes such as hemispherical.

The horizontal rigidity of the air spring device with soft spring characteristics in the vertical direction is inevitably reduced. Thus, the air spring device tends to be deformed into a shape that inclines the lower face plate 2 with respect to the horizontal direction by a large shear deformation of the elastic body 6 due to the horizontal input force especially in a posture that the air spring device is compressed in the vertical direction. Since this may reduce the durability of the elastic body 6, in the present invention, the support plate 5 is provided with an annular body 8 surrounding an end potion of the elastic body at the support plate side (in the figure, the lower end portion), and the lower face plate 2 is provided with a protruding portion 9 which protrudes into the interior of the annular body 8 and may enter into the interior of the elastic body 6.

According to this configuration, when a vertical input force is applied to the air spring device, the protruding portion 9 of the lower face plate 2 enters into the interior of the annular body 8 of the support plate 5 to allow the annular body 8 provided on the support plate 5 to restrain the deformation of the elastic body portion surrounding the protruding portion 9, so that the elastic body portion undergoes primarily compressive deformation with respect to the horizontal input force on the air spring device to elastically bear the horizontal input force. As a result, even when the vertical spring constant of the air spring device is reduced as described above, the air spring device retains hard spring characteristics against a large vertical load. In particular, under a heavy load condition such as a condition where the vehicle is fully loaded, the increased internal pressure of the air spring 4 allows the elastic body 6 to further enter into the interior of the annular body 8, which can increase the horizontal rigidity of elastic body 6 as well as the horizontal rigidity of the cylindrical flexible diaphragm 3. This can effectively prevent the deterioration of the durability of the elastic body 6.

It should be noted that although the annular body 8 is integrally formed with the support plate 5 in the figure, it may be formed as a separate member and can be mounted afterward on the support plate by a screw or the like. The same manner can be applied to the formation of the protruding portion 9 on the lower face plate 2.

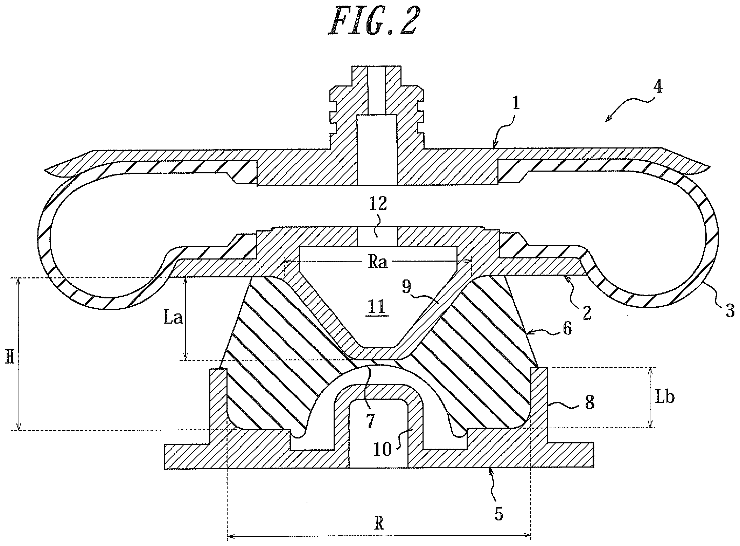

From a view point that the protruding portion 9 or the annular body 8 as described above can effectively assist the air spring device in retaining hard spring characteristics against the horizontal input force where a vertical load is applied to the air spring device at an actual use condition, the dimensions of the air spring device with no load being applied on a stopper rubber before the air spring has been assembled (i.e. the dimension under free load) are preferably set as below. Referring to the vertical cross-sectional view in Fig. 2, a protruding length La of the protruding portion 9 from the lower face plate 2 is preferably 20% to 70%, and more preferably 33% of a vertical height H of the elastic body 6, and a projecting length Lb of the annular body 8 from the support plate 5 is preferably 15% to 50%, and more preferably 26% of the height H of the elastic body 6. In addition, in the air spring device having a frustoconical-shaped elastic body 6 and an inverted frustoconical-shaped protruding portion 9 such as the one shown in the figure, a maximum diameter Ra of the protruding portion 9 is preferably 40% to 80% of an inner diameter R of the annular body 8 in order to secure the desired volume of the elastic body 6 which contributes to the realization of soft spring characteristics of the air spring device in the vertical direction.

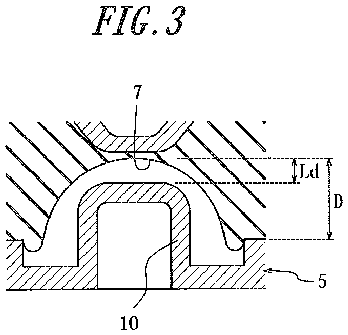

When the rigidity of the spring needs further enhancement in accordance with the horizontal input force, as illustrated in Figs. 1 and 2, an raised portion 10 housed in the recessed portion 7 of the elastic body 6 can be provided on the support plate in an unified manner or as a separate member. Accordingly, by appropriately selecting the size and shape of the raised portion 10, when a large horizontal input force is applied to the air spring device, the amount of horizontal relative displacement between the support plate 5 and the air spring 4 can be regulated by the raised portion 10 abutting on the recessed portion 7 of the elastic body 6. The raised portion 10 may have various sizes and shapes in accordance with the shape of the recessed portion, or the use condition of the air spring device. In this embodiment, for example, a vertical spaced distance Ld between the raised portion 10 and the bottom face of the recessed portion 7 as illustrated in the enlarged view in Fig. 3 is 65% of a depth D of the recessed portion 7 of the raised portion. It should be noted that the spaced distance Ld is preferably determined according to the use condition of the air spring device with considering both of the static and dynamic inputs when the air spring device is mounted to and used on the vehicle.

In the air spring illustrated in Fig. 1, for the purpose of further improving the ride comfort of the vehicle, a gas chamber 11 is formed in an interior of the protruding portion 9 provided on the lower face plate 2, and a passage 12 is placed in communication with the air spring to soften the vertical spring characteristics of the air spring device under a condition that the air spring 4 is effectively operated. However, the gas chamber 11 and the passage 12 are not essential components of the present invention.

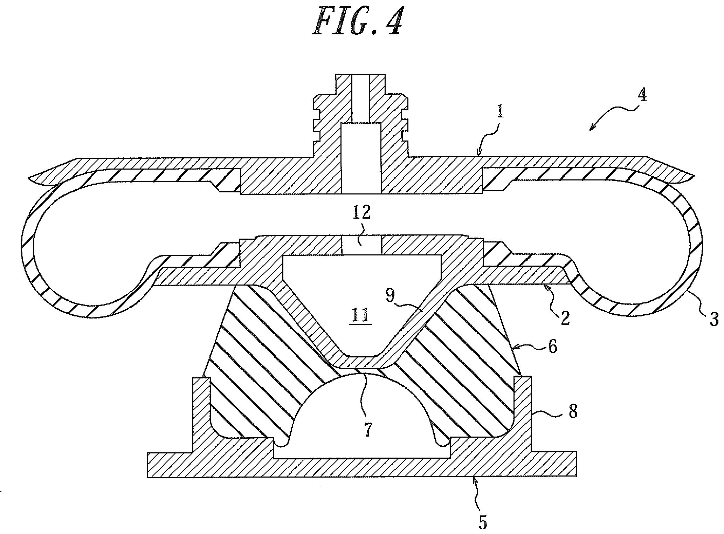

The air spring device as illustrated in Figs. 1 and 2 are provided with the raised portion 10 on the support plate 5. However, the raised portion 10 is not an essential element of the present invention, and the air spring device can be configured without providing a raised portion placed on the support plate 5 as illustrated in Fig. 4.

### REFERENCE SYMBOLS

- 1: Upper face plate
- 2: Lower face plate
- 3: Cylindrical flexible diaphragm
- 4: Air spring
- 5: Support plate
- 6: Elastic body
- 7: Recessed portion
- 8: Annular body
- 9: Protruding portion
- 10: Raised portion
- 11: Gas chamber
- 12: Passage
- La: Protruding length of the protruding portion
- Lb: Projecting length projecting out
- H: Height of the elastic body
- Ra: Maximum diameter of the protruding portion
- R: Inner diameter of the annular body
- Ld: Spaced distance
- D: Depth of the recessed portion

## Claims

1. An air spring device comprising:
an air spring (4) having a gas-filled interior defined by an upper face plate (1), a lower face plate (2), and a cylindrical flexible diaphragm body (3) hermetically connecting the respective face plates (1, 2);
a support plate (5) arranged at a given distance from one of the upper and lower face plates (1, 2) of the air spring (4); and
an elastic body (6) connecting the support plate (5) and the one of the upper and lower face plates (1, 2), wherein
the elastic body (6) is provided with a recessed portion (7) in a center region of a face adjacent to the support plate (5), the recessed portion (7) being recessed toward the one of the upper and lower face plates (1, 2);
the elastic body (6) is surrounded and restrained at a support plate side by an annular body (8) which is provided on the support plate (5) and which projects from the support plate (5); and
the one of the upper and lower face plates (1, 2) is provided with a protruding portion (9) protruding to an interior of the annular body (8).

2. The air spring device according to claim 1, wherein the support plate (5) is provided with a raised portion (10) housed in the recessed portion (7) of the elastic body (6).

3. The air spring device according to claim 1 or 2, wherein, the protruding portion (9) of the one of the upper and lower face plates (1, 2) has an interior formed as a gas chamber (11) in communication with gas-filled interior of the air spring (4).

## Patentansprüche

1. Luftfedervorrichtung, die Folgendes umfasst:
eine Luftfeder (4), die ein gasgefülltes Inneres aufweist, das durch eine obere Frontabdeckung (1), eine untere Frontabdeckung (2) und einen zylindrischen flexiblen Membrankörper (3), der die jeweiligen Frontabdeckungen (1, 2) hermetisch verbindet, definiert wird,
eine Stützplatte (5), die in einem gegebenen Abstand von einer der oberen und der unteren Frontabdeckung (1, 2) der Luftfeder (4) angeordnet ist, und
einen elastischen Körper (6), der die Stützplatte (5) und die eine von der oberen und der unteren Abdeckung (1, 2) verbindet, wobei
der elastische Körper (6) mit einem eingezogenen Abschnitt (7) in einem Mittenbereich einer Fläche, angrenzend an die Stützplatte (5), versehen ist, wobei der eingezogene Abschnitt (7) zu der einen von der oberen und der unteren Frontabdeckung (1, 2) hin eingezogen ist,
der elastische Körper (6) auf einer Stützplattenseite durch einen ringförmigen Körper (8) umschlossen und zurückgehalten wird, der auf der Stützplatte (5) bereitgestellt wird und der von der Stützplatte (5) vorsteht, und
die eine von der oberen und der unteren Frontabdeckung (1, 2) mit einem vorspringenden Abschnitt (9) versehen ist, der zu einem Inneren des ringförmigen Körpers (8) vorspringt.

2. Luftfedervorrichtung nach Anspruch 1, wobei die Stützplatte (5) mit einem erhöhten Abschnitt (10) versehen ist, der in dem eingezogenen Abschnitt (7) des elastischen Körpers (6) untergebracht ist.

3. Luftfedervorrichtung nach Anspruch 1 oder 2, wobei der vorspringende Abschnitt (9) der einen von der oberen und der unteren Frontabdeckung (1, 2) ein Inneres aufweist, das als eine Gaskammer (11) in Verbindung mit dem gasgefüllten Inneren der Luftfeder (4) geformt ist.

## Revendications

1. Dispositif de ressort pneumatique, comprenant :
un ressort pneumatique (4) comportant un intérieur rempli de gaz, défini par une plaque frontale supérieure (1), une plaque frontale inférieure (2) et un corps de membrane cylindrique flexible (3) connectant de manière hermétique les plaques frontales respectives (1, 2) ;
une plaque de support (5) agencée à une distance donnée des plaques frontales supérieure et inférieure (1, 2) du ressort pneumatique (4) ; et
un corps élastique (6) connectant la plaque de support (5) et ladite une des plaques frontales supérieure et inférieure (1, 2) ; dans lequel :
le corps élastique (6) comporte une partie évidée (7) dans une région centrale d'une face adjacente à la plaque de support (5), la partie évidée (7) étant évidée vers ladite une des plaques frontales supérieure et inférieure (1, 2) ;
le corps élastique (6) est entouré et retenu au niveau d'un côté de la plaque de support par un corps annulaire (8) agencé sur la plaque de support (5) et débordant de la plaque de support (5) ; et
ladite une des plaques frontales supérieure et inférieure (1, 2) comporte une partie en saillie (9) débordant vers un intérieur du corps annulaire (8).

2. Dispositif de ressort pneumatique selon la revendication 1, dans lequel la plaque de support (5) comporte une partie surélevée (10) logée dans la partie évidée (7) du corps élastique (6).

3. Dispositif de ressort pneumatique selon les revendications 1 ou 2, dans lequel la partie en saillie (9) de ladite une des plaques frontales supérieure et inférieure (1,2) comporte un intérieur ayant la forme d'une chambre à gaz (11), en communication avec l'intérieur rempli de gaz du ressort pneumatique (4).
